# EUROPEAN PATENT APPLICATION

(11) **EP 4 477 364 A1**
(43) Date of publication of application: **18.12.2024**
(21) Application number: 24181532.3
(22) Date of filing: 11.06.2024
(51) Int. Cl.: B25J 9/00, B65B 5/00, B65B 11/00, G06Q 10/083

(54) **DELIVERY STATION AND METHODS FOR PREPARING ORDERS DELIVERED INSIDE BAGS**

(30) Priority: 12.06.2023 US 202318208355
(71) Applicant: 1MRobotics Ltd, 7925000 Bnei Darom (IL)
(72) Inventor: AHARONI, Yadin, 6382305 Tel Aviv (IL); BERG, Raz, 4630880 Herzliya (IL); LEVINSKY, Igor, 6249228 Tel Aviv (IL); TUVAL, Roee, 5832929 Holon (IL); YAIR, Eyal, 7925000 Bnei Darom (IL)
(74) Representative: Schulz Junghans Patentanwälte PartGmbB

(57) **Abstract**

A fully autonomous system, comprising one or more storage devices containing goods to be delivered; an unfolding station configured to receive a collapsed bag and unfold the bag to an open bag; a robotic arm configured to extract the collapsed bag and place the collapsed bag at the unfolding station; a moving collector moving between the one or more storage devices for collecting the goods and placing the goods in the open bag.

## Description

### FIELD

The present invention relates to methods for preparing orders delivered inside bags.

### BACKGROUND

There is a growing need for delivery services, mainly in the on-demand space. Consumers require that the goods are provided within short time durations (SLAs), sometimes within an hour or two, or even less, from the request time. This requires companies to increase efforts in the "last mile", to be closer to the consumers' residences and offices, as opposed to having larger warehouses outside city centers, which was the standard in the past. Companies need sufficient geographic coverage in cities to supply the goods quickly.

The goods are manufactured in the factory, then transferred to a regional warehouse, and from the regional warehouse they are transported to the "last mile" facilities (close to the consumers). The facilities may be shops that also work with delivery services that provide the goods to the consumers, or enable the consumers to come to the shops and collect the goods.

Last-mile facilities can be stores that need employees to operate the deliveries, which increases operation costs and the area required for the employees. Autonomous delivery stations prepare the orders using robots. Yet, there is a need to deliver the orders inside bags to provide a better user experience to the delivery station's customers.

### SUMMARY

In one aspect of the invention a fully autonomous system is provided, comprising one or more storage devices containing goods to be delivered; an unfolding station configured to receive a collapsed bag and unfold the bag to an open bag; a robotic arm configured to extract the collapsed bag and place the collapsed bag at the unfolding station; a moving collector moving between the one or more storage devices for collecting the goods and placing the goods in the open bag.

In some cases, the system further comprises a management unit for receiving orders for goods and a kiosk used by a user of the delivery station, the kiosk has an aperture that enables collecting the bag with the goods outside the housing. In some cases, the system further comprises a waiting station configured to store the open bag with the goods before the open bag is transferred to the kiosk. In some cases, the unfolding station carries the open bag when filled by the collector.

In some cases, the unfolding station comprises a load sensor for detecting the presence of the goods added to the open bag. In some cases, the open bag comprises a base and sidewalls coupled to the base. In some cases, the system further comprises proximity sensors for detecting that the bag is moved from the unfolding station. In some cases, the moving collector extends from the robotic arm.

In some cases, the unfolding station further comprises a bag compartment configured to receive the collapsed bag from the robotic arm. In some cases, the robotic arm comprises a robotic vacuum pad enabling separation of a single collapsed bag from a stack of collapsed bags. In some cases, the robotic arm comprises a hinge that enables changing a posture of the collapsed bag from a first posture at the stack of collapsed bags to a second posture at the unfolding station. In some cases, the unfolding station comprises an unfolding vacuum pad configured to secure the collapsed bag to the unfolding station. In some cases, the system further comprises a motor configured to move the unfolding vacuum pads upwards and downwards. In some cases, the unfolding station comprises movable wings having a closed state closer to a body of the unfolding station an open state farther from the body of the unfolding station; wherein the movable wings are in the closed state when receiving the collapsed bag movement to the open state unfolds the collapsed bag. In some cases, the system further comprises a stack area configured to store a stack of collapsed bags. In some cases, the unfolding station comprises a vacuum manifold pressure sensor configured to measure a suction force exerted by the vacuum pads on the collapsed bag.

### BRIEF DESCRIPTION OF THE DRAWINGS

Some embodiments of the invention are herein described, by way of example only, concerning the accompanying drawings. With specific reference now to the drawings in detail, it is stressed that the particulars shown are by way of example and for purposes of illustrative discussion of embodiments of the invention. In this regard, the description taken with the drawings makes apparent to those skilled in the art how embodiments of the invention may be practiced.

In the drawings:
Fig. 1 shows an external view of the delivery station, according to an exemplary embodiment of the present invention;
Fig. 2 shows a storage volume of the delivery station, according to an exemplary embodiment of the present invention;
Figs. 3A-3B show a collector collecting goods from a pallet of the delivery station, according to an exemplary embodiment of the present invention;
Figs. 4A-4C show a pallet storing goods used in the delivery station, according to an exemplary embodiment of the present invention;
Figure 5 shows a method for delivering an order from a delivery station, the order is delivered in a bag, according to exemplary embodiments of the invention;
Figure 6 shows a method for unfolding a bag from a stack of collapsed bags, according to exemplary embodiments of the invention;
Figures 7A-7F show the unfolding mechanism in various states during the unfolding process of the collapsed bag, according to exemplary embodiments of the invention.

### DETAILED DESCRIPTION

The technical challenge solved using the invention is to provide automated delivery stations that can supply goods quickly and accurately, without consuming big areas, as the real estate in cities is very expensive. Another technical challenge is delivering goods in bags from an autonomous delivery station. The challenge is to store, erect and fill the bags in an efficient manner, both in terms of the time required to prepare the order, the volume required by the robotic system in order to prepare the order, and the malleability of bag materials.

The bag is defined in the context of the invention as a sheet of a collapsible material, such as paper, polyethylene, polyamide used to produce nylon and the like. The bags are stacked one on top of the other, in a collapsed state, in order to reduce the volume consumed by the bags in the delivery station.

The technical solution disclosed by the invention is to provide a fully autonomous system that comprises a collector configured to collect items from storage areas and a mechanism for extracting a collapsed bag from the stack of bags and unfolding the collapsed bag, such that the collector can place the items inside the open, unfolded, bag. The term "fully autonomous" is defined in a manner that the station does not need any person to operate the components disclosed herein. The system can be embedded in a delivery station that receives orders and outputs orders via a kiosk. The system can be utilized in a warehouse, a store and other commercial or residential facilities.

The delivery station comprises housing. The housing may be configured to prevent unauthorized persons to access the goods, and/or keep the goods in desired conditions, for example, a desired temperature and humidity range. The housing may be secured to a surface, such as a floor, or pavement, for example using screws. The housing may comprise at least some of a group comprising a base, sidewalls extending upwards from the base, and a ceiling.

The term "goods" refers to items that satisfy human wants and provide utility, for example, to a consumer making a purchase of a satisfying product. The goods in the delivery station may be packed, for example in cans, bottles, plastic boxes, cardboard boxes, bags made of polymers such as polyethylene, and the like. The goods may be food products, beverages, electronic appliances, games, toys, clothes, and the like.

The term "storage devices" refers to an object in the housing that stores goods. The object may be a shelf, a container, a box, a pallet, and the like. The storage device may be a flat transport structure, which supports goods in a stable fashion while being lifted by another object, such as a forklift, a pallet jack, a front loader, a jacking device, or an erect crane. The storage devices may be secured to the body of the housing with strapping, stretch wrap or shrink wrap. The storage devices can also be made of plastic, metal, wood, paper, and other materials.

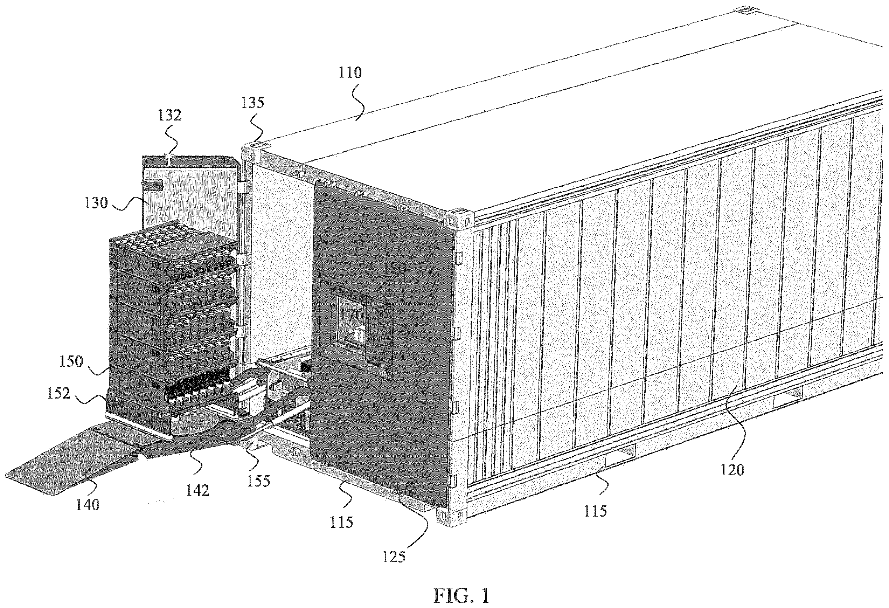

Fig. 1 shows an external view of the delivery station, according to an exemplary embodiment of the present invention. The external view is defined as a view from outside the delivery station's housing. The housing comprises a base 115, sidewalls 120 extending from the base 115, and a ceiling 110. The shape of the base 115 may be rectangular, for example, to be easily carried on a truck/ship. In such a case, the housing may have four sidewalls extending from the four edges of the base 115. In some exemplary cases, the size and shape of the housing may be of an intermodal container, easily shipped using trucks, trains, and ships, and some mechanical and/or electrical components disclosed herein.

At least one of the sidewalls 120 enables loading goods into the delivery station and delivering goods from the delivery station. When delivering the goods, a kiosk 170 is opened. The kiosk 170 may be formed as a niche in one of the sidewalls 120. In the standard mode of operation, the kiosk 170 is closed, for example using a movable sheet. When there is a requirement to open the kiosk, for example, to deliver goods from the delivery station, the movable sheet is moved, for example sidewards, upwards, or downwards, enabling a person to access the goods. The goods may be placed on a surface inside the storage volume, such as a shelf located near the top end of the kiosk 170. In some cases, the movable sheet may move in response to a command from a management system of the delivery station. The command may be issued after the person receiving the goods is identified, for example by scanning a code, exchanging signals from the person's cellular phone, and the like.

In some exemplary cases, the delivery station further comprises a user interface 180 coupled to one of the sidewalls 120. The user interface 180 enables users to interact with the management system. Such interaction may include identification of persons, request of delivery, initiation of a loading process for loading goods into the housing 110 and the like.

In standard mode or operation, the housing is closed, to facilitate maintenance of desired conditions, such as light, temperature, humidity, and the like. When goods are to be loaded into the delivery station, a door 130 of front sidewall 125 of the sidewalls 120 may be opened, to collect the goods 150. In some cases, a door will be open on one of the sidewalls 120 to allow fast replenishing of the delivery station. The goods 150 may be provided on a storage devices such as pallet 152, or on another movable base configured to carry the goods 150.

In standard operation mode, the door 130 is closed, preventing access to the storage volume defined inside the housing and keeping the volume inside the housing 110 in desired conditions, for example in terms of temperature and humidity. In loading mode, the door is either automatically opened, for example by an actuator, or by a mechanism unlocking a lock that prevents the door 130 from moving. The door 130 may move outside from the housing, or inside, towards the storage volume.

When loading new goods into the delivery station, a command is received at the management system to initiate a loading process. The loading process may comprise opening the door 130 and moving a loading ramp 140, 142 outside the storage volume via the aperture created by opening the door 130. The loading ramp 140, 142 may be placed on a surface on which the base is located, such as a floor. The pallet 152 may be placed on the loading ramp 140, 142, or on the ground or floor, and carried onto the loading ramps 140, 142. The loading ramp 140 may have a slope beginning from the ground, shown as an example at the farthest point from the sidewalls 120. This way, the pallet 152 may be carried from the ground onto the loading ramp 140.

The loading ramps 140, 142 are coupled to and maneuvered by loading arms 155 coupled to the delivery station's body, for example to the base or to a structure coupled to the base. The loading arms 155 receive power from an actuator (not shown), such as an engine. During standard operation mode, the loading ramp 140, 142 are located in a loading location inside the storage volume. When loading goods into the storage volume, the loading arms 155 may move the loading ramps 140, 142 from the loading location outside the storage volume. The loading arms 155 may move the loading ramp 140, 142 in any posture or direction desired by a person skilled in the art. Once the pallet 152 is located on the loading ramps 140, 142, the loading arms 155 move the pallet 152 and the loading ramp 140, 142 to the loading location inside the storage volume.

The delivery station may comprise a push-pull module for carrying storage devices such as pallets inside the housing. The push-pull module may also carry the packer when the collector collects the goods. Then, when loading a new storage device, or when removing a storage device from the housing, the push-pull module places the packer in a bay in the housing. Then, when preparing another order, the push-pull module moves to the bay and the packer is placed back on the push-pull module. When loading a new pallet, a push-pull module moves towards the loading location, collects the new pallet 152, and carries the new pallet 152 to a specific area inside the housing. Once the pallet is in place, the delivery station's memory updates that specific goods are located in a specific area. For example, sub-area #5 stores a total of 200 cans, of which 80 cans are diet coke, 50 cans are regular coke, and 70 cans are mineral water. This information may be received from a device operated by a person or robot that provided the pallet 152 outside the delivery station and sent a message that the pallet 152 is ready to be loaded. This information may be provided by a sensor, such as an image sensor, operating in the storage volume, using RFID, image processing techniques and the like.

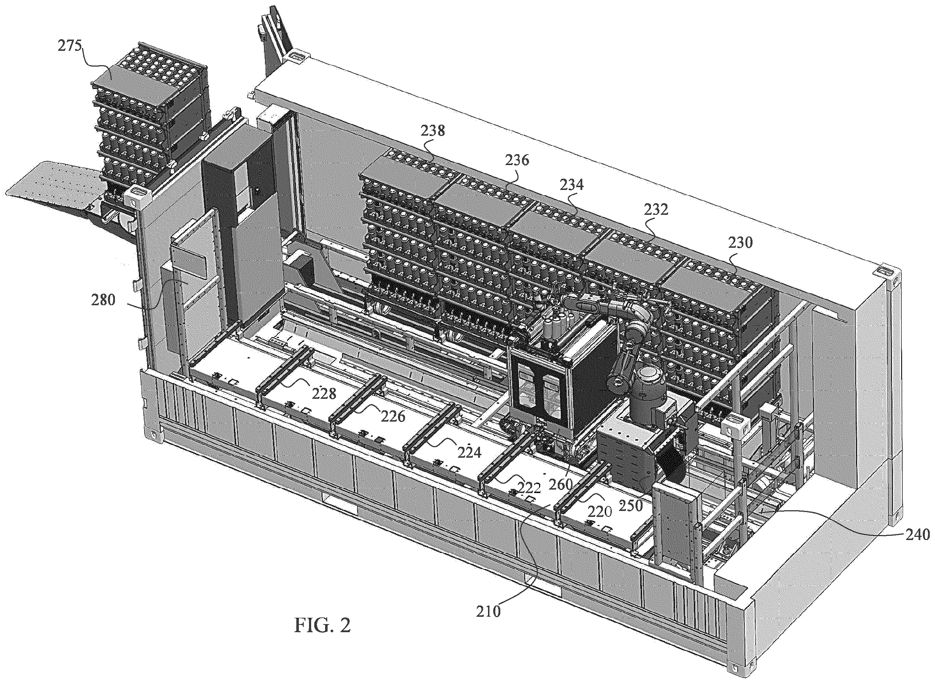

Fig. 2 shows a storage volume of the delivery station, according to exemplary embodiment of the present invention. The delivery station comprises a kiosk 280 for delivering the goods, side tracks 220, 222, 224, 226, 228 for sliding the storage devices into places and a storage surfaces 210 for carrying the storage devices when located in storage position. The delivery station comprises a main track 240 located along the longitudinal axis of the storage volume. The longitudinal axis may have one of its ends in, or close to, the aperture from which the storage devices 275 are loaded into the storage volume. This way, the storage device 275 moves along the main track 240 until reaching a desired location along the main track. The desired location may be one of the side tracks 220, 222, 224, 226, and 228. Then, the storage device 275 is pushed into one of the side tracks into the storage position. In standard operation, the storage device 275 remains in the storage position until replacing the storage device 275, for example when the storage device is empty.

In some exemplary cases, storage devices are located on both sides of the main track 240. When loaded into the storage volume, the loading arms carry the storage devices 275 to a storage device surface moving along the main track. The storage device surface may be coupled to an actuator receiving commands as to the side track that collects the storage devices 275. For example, the command may be "move the storage device to the third side track to the left". Figure 2 also shows storage devices represented as pallets 230, 232, 234, 236, and 238 located in the storage positions on the left side of the main track 240 (left when viewed from the door 130), while the storage positions on the right side of the main track 240 are empty.

The delivery station comprises a collector 250 movable along the main track 240. The collector comprises a base coupled to the main track 240 and a collecting arm capable of collecting goods from the storage devices, such as pallets 230, 232, 234, 236, 238. The collector also 250 comprises hardware for executing commands, such as "collect goods from tray #4 in pallet # 12", or a list of goods to be collected and packed as a single order to be delivered. The collector 250 may be coupled to an actuator, such as a motor, that moves the collector 250 along the main track 240. In some other cases, the main track 240 may have magnetic units that attract the collector 250 by applying a magnetic field.

The delivery station comprises a packer 260 for packing goods in a single order to be delivered via the kiosk 280. The packer 260 may move next to the collector 250, such that the collector 250 places goods collected by the collecting arm on a surface or a container of the packer 260. The packer 260 may be coupled to the collector 250 when the collector 250 collects the goods from the storage devices. Such coupling may be defined as the packer 260 being in direct physical contact with the collector 260, or that the packer 260 is placed on a movable element that is coupled to a base on which the collector 250 moves between the storage devices. When all the goods of a certain order are collected and placed on or inside the packer 260, the packer 260 packs the goods, for example by covering the goods in a bag. The bag may be sealed, or partly closed, facilitating carriage by a person. In some cases, the packer 260 may pack goods when the number of collected goods exceeds a threshold, for example, due to size or weight constraints, such as packing every 6 cans, even if the order is not completed.

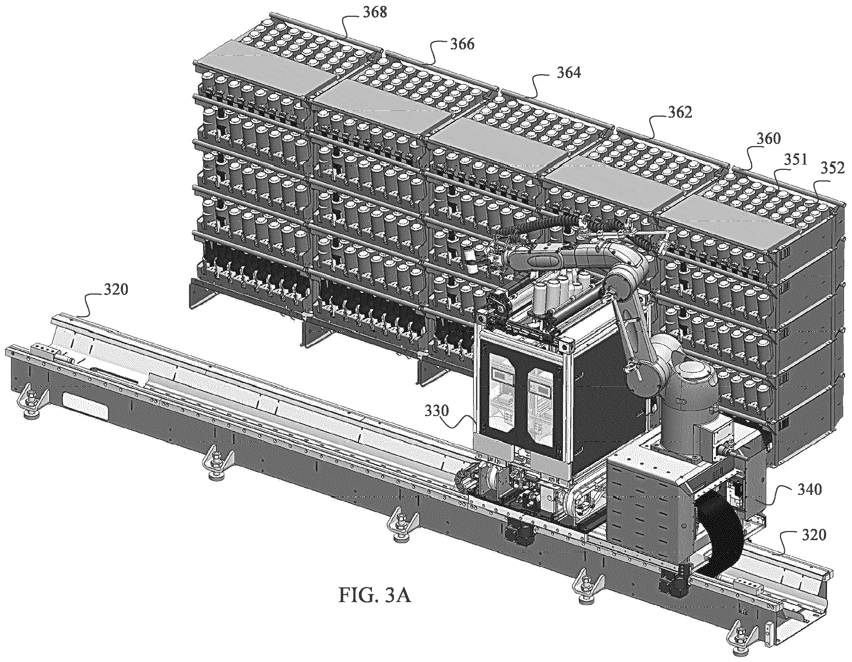

Figs. 3A-3B show a collector collecting goods from a pallet of the delivery station, according to exemplary embodiment of the present invention.

The collector 340 and the packer 330 move along the main track 320. On one side of the main track 320 there are multiple pallets 360, 362, 364, 366, 368, each of which stores goods. The number of goods, type of goods, and location of goods in the pallets may be known to the management system, for example, stored in a memory of the management system, and the management system sends commands to the collector 340 based on this information. In some other cases, the collector 340 collects items based on image recognition techniques. For example, the collector 340 receives a list of items to be collected, identifies the items in real-time from images and collects the items accordingly.

The collector 340 may collect the goods facing the main track, or goods located in other sections of the pallets which are accessible thereto, for example, the topmost section of pallets. For example, the collector 340 may collect items 351, and 352 located in a top section of pallet 360.

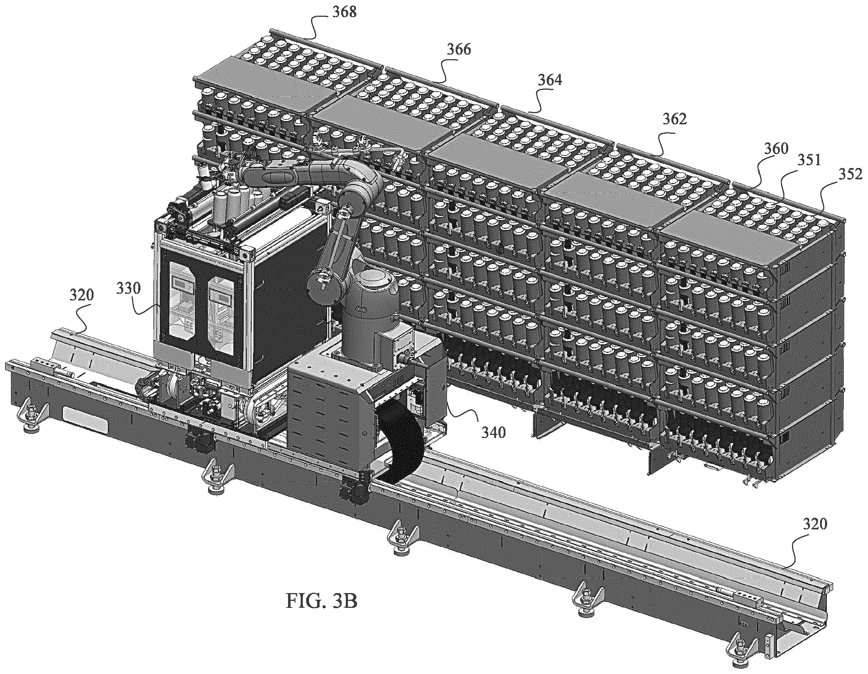

In figure 3B, the collector 340 and the packer 330 move towards pallet 368. In some cases, the size of the housing defines that there is a single main track for both the collector and the packer. In some other cases, the delivery station may comprise multiple collectors and packers traveling inside the storage volume. For example, multiple collectors may collect goods of a single order and place the goods in a single packer. In some cases, the delivery station may comprise multiple tracks, for example two tracks, one track on the right side of the housing and a second track on the left side of the housing, to enable the delivery station to produce more orders on a given time unit.

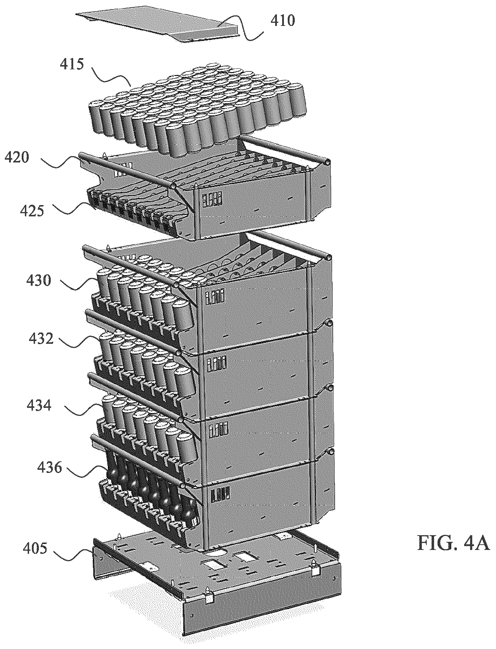

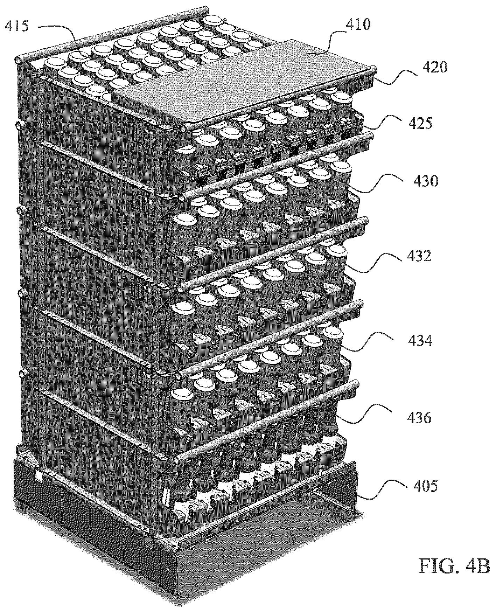

Figs 4A-4C show a pallet storing goods used in the delivery station, according to exemplary embodiment of the present invention. The goods of the delivery station are arranged on stacked shelves or trays, such as tray 420. The stacked trays are mounted on a pallet 405, for easy transfer. The surface of the tray 420 is in slope facing the main track on which the collector moves, such that the goods move downwards the surface when previous items are collected from the tray 420. A buffer, such as a buffer 410, is coupled to at least some of the trays, to protect the goods. The trays may be stacked one on top of the other using the structure of the trays, for example using pins, niches, protruding members, and the like, which are integral, non-removable parts of the trays. The trays stacked on top of a single pallet may contain multiple types of goods, such as beverages, cigarettes, and clothing items. At least some of the trays comprise barriers, such as barrier 425, configured to prevent the goods 430, 432, 434, and 436 from falling from the tray toward the main track, as the tray's surface is on a slope.

The autonomous system comprises a memory for storing information. The memory may store a set of instructions for performing the methods disclosed herein. The memory may also store rules for operating the autonomous system, for example, algorithms for collecting goods from the storage devices when receiving a new order, commands to be sent to the robotic arm, and the like. The autonomous system may also comprise a communication unit for exchanging information with other systems/devices, such as user's devices, remote warehouses when requesting new goods to be loaded, and the like. The autonomous system comprises a processor for executing the instructions stored in the memory. The processor may be a general-purpose processor, a microprocessor, or any other processor desired by a person skilled in the art.

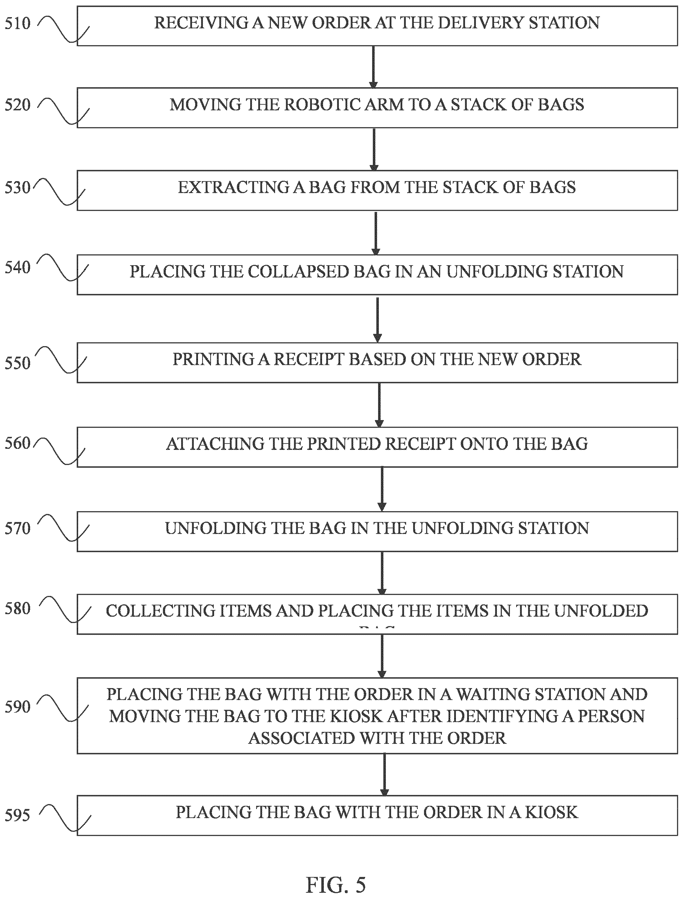

Figure 5 shows a method for delivering an order from a delivery station, the order is delivered in a bag, according to exemplary embodiments of the invention.

Step 510 discloses receiving a new order at the delivery station. The order may be received via a management system of the delivery station, for example over the internet, a cellular network, an interface coupled to the delivery station's housing and the like. The order comprises one or more items to be delivered and details of the person or object to receiving the order. The object may be a drone or another kind of robot.

Step 520 discloses moving the robotic arm to a stack of bags. The stack of bags may include a single type of bags, stacked one on top of the other. The bags may be made of paper, recycled paper, nylon, fabric, cotton, synthetic fabrics and the like. The bags may have an opening via which items can be placed inside the bags. The bags may have a bottom and sidewalls, or just sidewalls. The stack of collapsed bags are placed in a specific area inside the housing of the delivery station. Moving the robotic arm may be controlled by the station's management system, for example by sending motion commands, in the manner of "move 0.5 meters to azimuth 75", then rotate, then move 0.84 meters to azimuth 170, then move 1.2 meters downwards, facing the arm's heading downwards.

Step 530 discloses extracting a bag from the stack of bags. The extraction may be done using vacuum pads, or using magnetic forces, for example in case the bags are made of a sheet of materials embedding metallic or other ferromagnetic materials, or using other direct mechanical manipulation such as robotic finger gripper. Activating the vacuum pads may be done by a command from the management system, for example in response to a message or indication provided by a sensor or from the robotic arm that the robotic arm reached the stack of bags. The bags in the stack of bags are mounted in a collapsed state, such that items cannot be dropped into the bag from a gripper located above the bag.

Step 540 discloses placing the collapsed bag in an Unfolding station. Placing the collapsed bag comprises moving the robotic arm from the stack of collapsed bags to the unfolding station. During such movement the collapsed bag is secured to the robotic arm, for example using the vacuum pads. Placing the bag on the unfolding station comprises releasing the collapsed bag from the robotic arm, for example by deactivating the robotic arm's vacuum pads.

Step 550 discloses printing a receipt based on the new order. The order comprises a list of goods in the order and payment details, such as credit card number, the sum of money paid, delivery date, and the like. Printing may be done using a printer located inside the housing and connected to the management system.

Step 560 discloses attaching the printed receipt onto the bag. Attaching the receipt comprises moving the robotic arm to the area of the printer, collecting the printed receipt from the printer's outlet and moving the receipt to the bag. This process is optional, as the order can be delivered without the receipt. The receipt can be attached to the bag before opening the bag or after opening the bag.

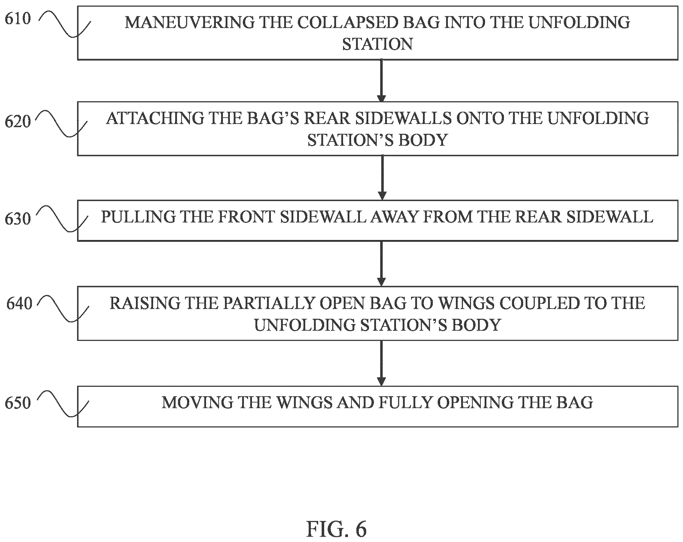

Step 570 discloses unfolding the bag in the Unfolding station. Unfolding the bag is defined as changing a posture of the bag to a posture that enables dropping items into the bag. Unfolding the bag is also defined as opening the bag's aperture to a minimal size, for example at least half of the bag's aperture's area. The unfolding process is elaborated in figure 6.

Step 580 discloses collecting items and placing the items in the unfolded bag. Collecting the items comprises moving the collector to the storage areas that store the items in the order and extracting the items from the storage area, then dropping the items from above the bag, or releasing the items from the collector when the items are already inside the bag. Collecting may be done one item after the other, or multiple items in a single process.

Step 590 discloses placing the bag with the order in a waiting station and moving the bag to the kiosk after identifying a person associated with the order, for example, using a code. The housing may have multiple waiting stations, for example, shelves, hangers coupled to the housing's body, poles, or walls. The bag may comprise handles located in an upper part of the bag, relatively close to the bag's aperture. Placing the bag in the waiting station may be done by hanging the bag's handles on the hangers.

Step 595 discloses placing the bag with the order in a kiosk. The kiosk may be a shelf located near an aperture. The aperture may be opened when the person collecting the order is identified, for example using a code or another identification process, such as biometric identification, wireless communication between the user's mobile device and a wireless receiver or scanner of the delivery station, and the like.

Figure 6 shows a method for unfolding a bag from a stack of collapsed bags, according to exemplary embodiments of the invention.

Step 610 discloses maneuvering the collapsed bag into the unfolding station. The maneuvering may comprise changing the bag's posture at the stack of bags, in which the bag's plane is parallel to the ground to a second posture, on the unfolding station, in which the bag's plain is perpendicular to the ground. Changing the bag's posture may be performed by rotating a joint of the robotic arm that moves the collapsed bag to the unfolding station.

Step 620 discloses attaching the bag's rear sidewalls onto the unfolding station's body. Attaching the bag comprise placing the bag's rear sidewalls near the unfolding station's attaching mechanism, such as vacuum pads or magnetic plates. Then, the unfolding station's attaching mechanism is activated, applying forces on the bag toward the unfolding station's body and away from the robotic arm. That is, when the bag is collapsed, the robotic arm carries the bag from one side and the unfolding station's body is on the other side of the bag. Attaching the bag's rear sidewalls onto the unfolding station's body may also include releasing the bag from the robotic arm, for example by deactivating the arm's vacuum pads or by moving the arm away from the bag.

Step 630 discloses pulling the front sidewall away from the rear sidewall. This process may be performed using the robotic arm, while the bag is carried by the unfolding station's attaching mechanism. Pulling the front sidewall away from the rear sidewall may include placing the robotic arm at the front sidewall of the bag and activating vacuum pads of the robotic arms. The vacuum pads may be activated to the amount that the rear side of the bag remains attached to the unfolding station's attaching mechanism and the front side of the bag moves toward the robotic arm, opening the bag's aperture.

Step 640 discloses raising the partially open bag to wings coupled to the unfolding station's body. Raising the bag may be done by placing the bag on a lift that moves along a vertical pole of the unfolding station's attaching mechanism. The bag moves along the vertical pole in a partially open state, in which the front side is separate from the rear side of the bag, but the bag's base is folded on one of the sides. The wings enter the partially open bag via the bag's aperture, making physical contact with the bag's base.

Step 650 discloses moving the wings and fully opening the bag. The wings may move in a circular manner, around an axis, or in a lateral manner, for example downwards or horizontally. The wings' movement separates the bag's base from one of the sides, forming a fully open bag, with a "floor" for receiving the goods. In some cases, the bag is ready for receiving goods without having a base, and the unfolding process ends when the front side has a minimal distance from the rear side.

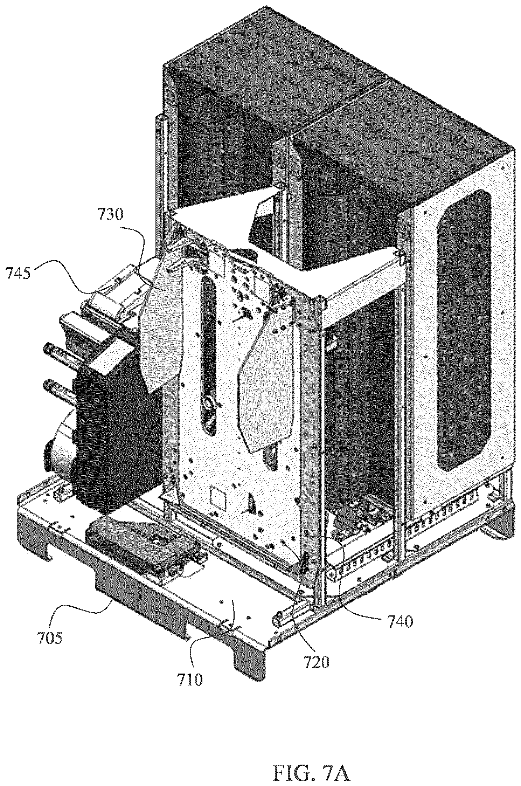

Figures 7A-7F show the unfolding mechanism in various states during the unfolding process of the collapsed bag, according to exemplary embodiments of the invention.

The unfolding station may comprise arms or another mechanism for carrying the open bag when filled by collector. The unfolding station may also comprise a load sensor for detecting presence of the goods added to the open bag. This way, the delivery station can verify that the goods collected by the collector are inserted properly into the bag. The unfolding station may also comprise one or more proximity sensors for detecting that the bag is moved from the unfolding station. The bag may be made of paper or another type of material that can both be folded and stacked and can stand on a stable base. The bag comprises a base and sidewalls coupled to the base.

Figure 7A shows the unfolding mechanism waiting for the collapsed bag. The unfolding mechanism comprises a main board 720 and two movable wings 730, 732 coupled to the main board. The movable wings 730, 732 have at least two states - in a closed state the movable wings 730, 732 partially enter the bag when the bag is partially open, and in an open state, the movable wings 730, 732 move inside the bag to fully open the bag. The movable wings 730, 732 may be coupled to the main board 720 using joints, enabling a rotational movement of the movable wings 730, 732 relative to the joint.

The main board 720 may be vertical, perpendicular to the ground. The man board 720 is coupled to movable securing mechanisms configured to secure the bag to the main board 720 during the unfolding process. The securing mechanisms may be vacuum pads, magnetic field creators, and the like.

The unfolding mechanism may be placed on a base 710 placed above an interface 705. The interface 705 is configured to move along the main track disclosed above. The unfolding mechanism may be required to move inside the delivery station, as efficiency requires that the collector is close to the unfolding mechanism when collecting the goods from the storage areas and placing the goods in the bag when the bag is held by the unfolding mechanism.

The base 710 may also carry a printer 745 configured to output printed sheets, such as paper. The printed sheets may be captured by the robotic arm and attached to the bag, for example using adhesive materials covering at least a portion of the printed sheet. The printed sheet may show information about the order, such as the list of goods in the bag, time of receipt of the order, time of preparation of the order, and the like.

The unfolding mechanism may also comprise a vertical pole 740 configured to secure the main board 720 to the base 710, for example using screws and/or connecting mechanisms selected by a person skilled in the art.

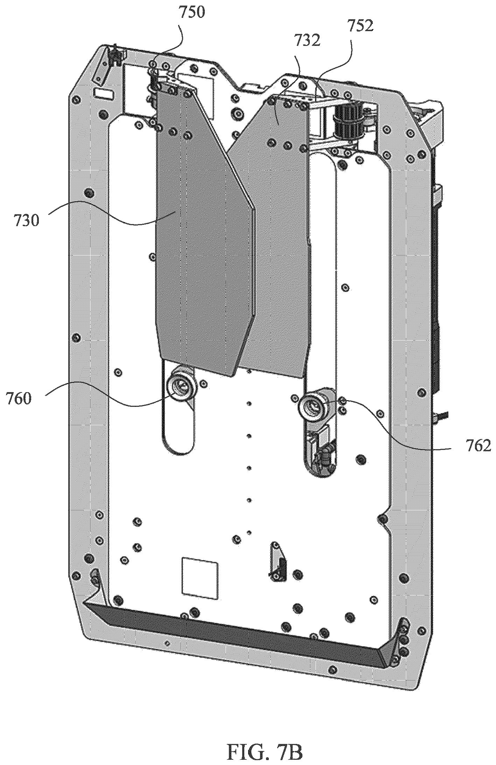

Figure 7B shows the unfolding mechanism, with vacuum pads 760, 762 as the securing mechanisms configured to secure the bag to the main board 720 during the unfolding process. The vacuum pads 760, and 762 are coupled to pads actuators configured to move the vacuum pads 760, and 762 and to a power source such as the electrical grid or a battery. The pads actuators may be coupled to a controller for activating and deactivating the vacuum pads 760, and 762 in accordance with the progress of the unfolding process.

Figure 7B also shows the joints 750, 752, configured to connect the main board 720 to the movable wings 730, 732, respectively. The joints 750, 752 may be affixed to the main board 720 using screws. Figure 7B shows the movable wings 730, 732 in a closed state, close to the main board 720.

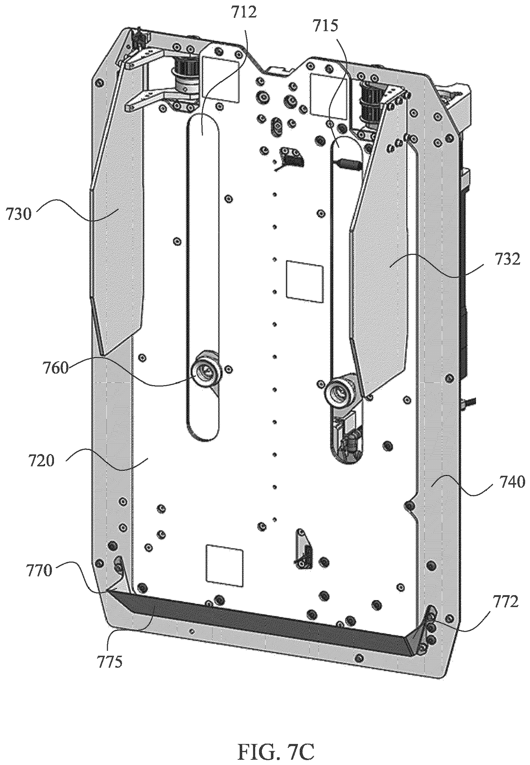

Figure 7C shows the movable wings 730, 732 in an open state, away from the main board 720. When the movable wings 730, 732 are in the closed state, the vacuum pads 760, 762 still keep the collapsed bag secured to the main board 720, as the movable wings' bottom end is higher than the vacuum pads 760, 762. When the movable wings 730, 732 in an open state, longitudinal apertures 712, 715 of the main body 720 can be seen. The longitudinal apertures 712, 715 enable moving of the vacuum pads 760, 762 upwards and downwards, hence moving the bag towards the movable wings 730 and 732, and enabling insertion of the movable wings 730 and 732 into the bag.

Figure 7C also shows the bag compartment 775 coupled to the main board 720. The bag compartment 775 is configured to receive the bag from the robotic arm that moves the bag from the stack of bags. The bottom part of the bag is inserted into the bag compartment 775 and the main part of the bag is secured to the main board 720 using the vacuum pads 760, 762. The bag compartment 775 may be tilted relative to the main board 720. The bag compartment 775 may be coupled to the main board 720 using compartment connectors 770 and 772.

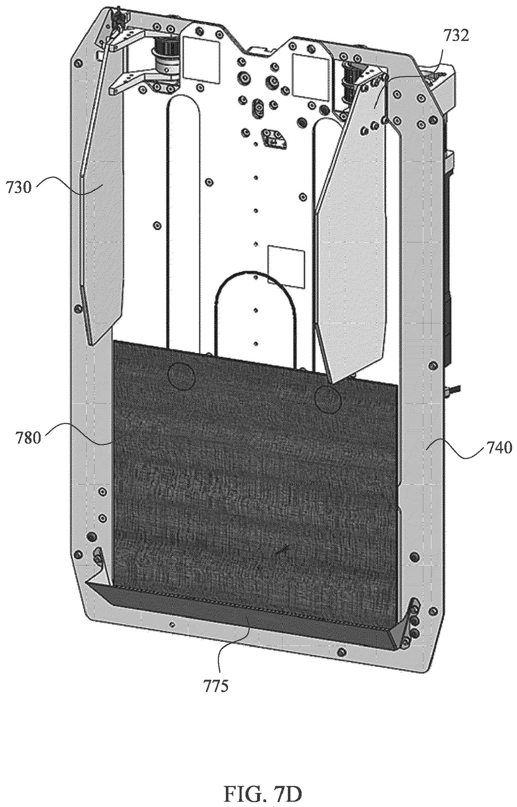

Figure 7D shows the movable wings 730, 732 in an open state and the bag 780 in a fully collapsed state. In the fully collapsed state, the front side and the rear side of the bag 780 are close in a manner that does not enable insertion of the movable wings 730, 732. Hence, the robotic arm moves towards the front side of the collapsed bag and pulls the front side, for example using vacuum pads, while the rear part of the bag 780 remains secured to the main board 720 using vacuum pads 760 and 762.

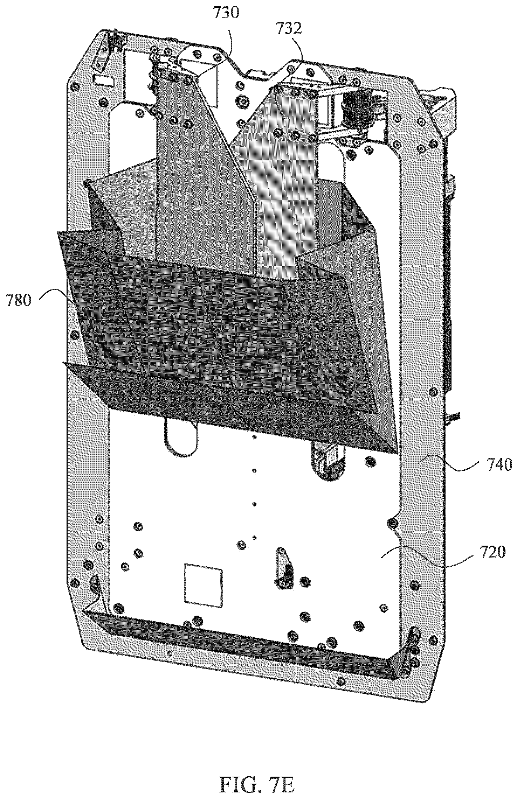

Figure 7E shows a partially open bag 780 moved upwards, toward the movable wings 730, 732. The movement of the bag 780 may result from movement of the vacuum pads 760, 762 that secure the rear side of the bag 780 to the main board 720. The bag is partially open, such that the distance between the rear side and the front side of the bag is at least one centimeter, and the movable wings 730, 732 can enter the bag 780. Partially open is defined as a case in which the base of the bag is folded onto one of the sides of the bag. Movement of the movable wings 730, 732 inside the bag 780 from the closed state to the open state unfolds the base from one of the sides, thereby fully opening the bag 780.

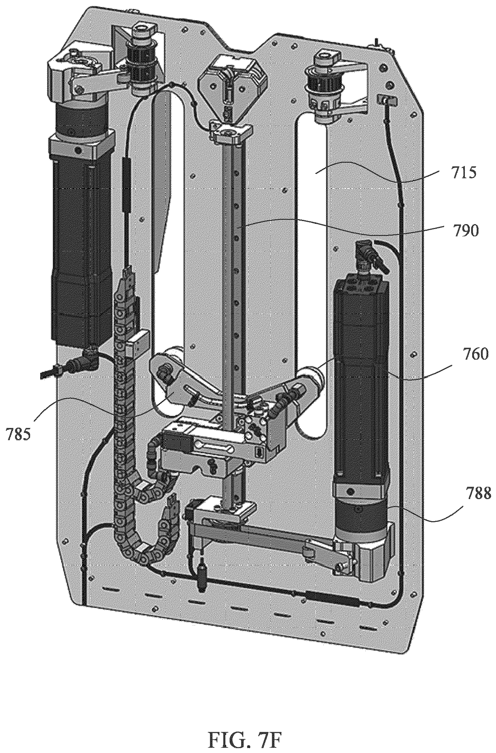

Figure 7F shows a rear side of the unfolding mechanism. The rear side of the main board 720 shows a pad holder 785 that moves along a track 790 located between the longitudinal apertures 712 and 715. The pad holder 785 carries the vacuum pads 760, 762, such that movement of the pad holder 785 along the track 790 moves the vacuum pads 760, 762, which in turn move the bag 780 upward, towards the movable wing, to unfold the base of the bag. The pad holder 785 moves using a pad holder actuator 785, which may be a motor, a piston, and the like.

While the disclosure has been described with reference to exemplary embodiments, it will be understood by those skilled in the art that various changes may be made and equivalents may be substituted for elements thereof without departing from the scope of the invention. In addition, many modifications may be made to adapt a particular situation or material to the teachings without departing from the essential scope thereof. Therefore, it is intended that the disclosed invention not be limited to the particular embodiments described herein.

## Claims

1. A fully autonomous system, comprising:
one or more storage devices containing goods to be delivered;
an unfolding station configured to receive a collapsed bag and unfold the bag to an open bag; and
a robotic arm configured to extract the collapsed bag and place the collapsed bag at the unfolding station.

2. The system of claim 1, further comprising a management unit for receiving orders for goods and a kiosk used by a user of the delivery station, the kiosk has an aperture that enables collecting the bag with the goods outside the housing.

3. The system of claim 2, further comprising a waiting station configured to store the open bag with the goods before the open bag is transferred to the kiosk.

4. The system of claim 1, wherein the unfolding station carries the open bag when filled by collector.

5. The system of claim 1, wherein the unfolding station comprises a load sensor for detecting presence of the goods added to the open bag.

6. The system of claim 1, wherein the open bag comprises a base and sidewalls coupled to the base.

7. The system of claim 1, further comprising proximity sensors for detecting that the bag is moved from the unfolding station.

8. The system of claim 1, wherein the robotic arm acts as a moving collector moving that moves between the one or more storage devices for collecting the goods and placing the goods in the open bag.

9. The system of claim 1, wherein the unfolding station further comprises a bag compartment configured to receive the collapsed bag from the robotic arm.

10. The system of claim 1, wherein the robotic arm comprises a robotic vacuum pad enabling separation of a single collapsed bag from a stack of collapsed bags.

11. The system of claim 1, wherein the robotic arm comprises a hinge that enables changing a posture of the collapsed bag from a first posture at the stack of collapsed bags to a second posture at the unfolding station.

12. The system of claim 1, wherein the unfolding station comprises an unfolding vacuum pad configured to secure the collapsed bag to the unfolding station.

13. The system of claim 12, further comprises a motor configured to move the unfolding vacuum pads upwards and downwards.

14. The system delivery station of claim 12, wherein the unfolding station comprises a vacuum manifold pressure sensor configured to measure a suction force exerted by the vacuum pads on the collapsed bag.

15. The system of claim 1, wherein the unfolding station comprises movable wings having a closed state closer to a body of the unfolding station an open state farther from the body of the unfolding station, wherein the movable wings are in the closed state when receiving the collapsed bag movement to the open state unfolds the collapsed bag.
